**Europäisches Patentamt**

**European Patent Office**

**Office européen des brevets**

(11) Veröffentlichungsnummer : **0 365 921 B1**

(12) **EUROPÄISCHE PATENTSCHRIFT**

(19)

(45) Veröffentlichungstag der Patentschrift :
**11.03.92 Patentblatt 92/11**

(21) Anmeldenummer : **89118872.4**

(22) Anmeldetag : **11.10.89**

(51) Int. Cl.⁵ : **E03F 9/00,** B08B 9/04,
**F16L 55/162, F16L 55/26**

(54) **Vorrichtung zum Befahren von geschlossenen Kanälen.**

(30) Priorität : **25.10.88 DE 3836277**
**25.10.88 DE 3836278**

(43) Veröffentlichungstag der Anmeldung :
**02.05.90 Patentblatt 90/18**

(45) Bekanntmachung des Hinweises auf die
Patenterteilung :
**11.03.92 Patentblatt 92/11**

(84) Benannte Vertragsstaaten :
**FR GB IT NL SE**

(56) Entgegenhaltungen :
**EP-A- 0 099 819**
**DE-U- 8 601 923**
**LU-A- 40 936**

(73) Patentinhaber : **HEINRICH SCHLICK GmbH**
**Grevenerstrasse 22-24**
**W-4402 Greven-Reckenfeld (DE)**

(72) Erfinder : **Ruholl, Heinz**
**Nordwalder Strasse 125**
**W-4407 Emsdetten (DE)**

(74) Vertreter : **Hoffmeister, Helmut, Dr. Dipl.-Phys.**
**Patentanwalt Goldstrasse 36**
**W-4400 Münster (DE)**

## Beschreibung

Die Erfindung betrifft eine Vorrichtung mit einem beweglichen Kopf, zum Befahren von geschlossenen Kanälen, bei der der Kopf über einen verdrehbaren und/oder höhenverstellbaren Ausleger (Manipulatorarm) mit der Stirnseite eines Zentralchassis verbunden ist, das Teil eines Fahrwagens ist, der über oberhalb und unterhalb des Zentralchassis angeordnete Räder verfügt.

Vorzugsweise wird die Vorrichtung mit einem Kopf ausgerüstet, der zum körnigen Strahlen der Innenflächen von geschlossenen Kanälen geeignet ist. Der Kopf kann jedoch auch eine optische Ausrüstung tragen, ein Gamma-Strahlenelement, einen Farbsprüher, eine Luftreinigungsdüse und dergleichen, wobei es darauf ankommt, daß der Kopf zu den Innenflächen des Kanals während des Vorschreitens der Vorrichtung einen definierten Abstand hält.

Bekannt ist eine Vorrichtung (EP-A-99 819), die als selbstgetriebenes Fahrzeug bei der Inspektion von geschlossenen Kanälen verwendet wird, die für Menschen nicht zu betreten sind (hier: Kanäle von Kernkraft-Reaktoranlagen). Die Vorrichtung besitzt ein Zentralchassis, an dem zwei Rollen unterhalb des Chassis und zwei weitere Rollen oberhalb des Chassis angebracht sind. Der vordere Teil des Chassis ist über die unteren Rollen nach vorn gekippt und hält damit eine "Schnüffelposition" ein, bei der ein Detektor auf dem Boden des Kanales entlangführbar ist. Durch Verstellen der Kippstellung und durch leichtes Verdrehen kann eine gewisse Beweglichkeit des Detektors erreicht werden. Das Fahrzeug wird in dieser Position abgestützt durch die beiden in Fahrtrichtung hintereinanderliegenden, an federnden, untereinander verzahnten Armen aufgehängten oberen Rollen, die an der Decke des Kanales entlangfahren.

Nachteilig ist, daß bei dem bekannten Fahrzeug das Zentralchassis gegenüber dem Boden immer nur eine bestimmte mittlere Höhe einnehmen kann, die durch die unteren Rollen festgelegt ist. Zwar wird eine Steuerung des Andrukkes des Detektors durch die oberen Rollen ermöglicht. Eine Berücksichtigung des Kanalquerschnittes insgesamt und eine Verstellung des Zentralchassis jeweils in die Mitte dieses Kanales ist nicht vorgesehen.

Um eine Vorrichtung zu schaffen, die zum Befahren, Reinigen und Strahlen schmaler, nur schwer begehbarer oder erreichbarer Kanal-Innenflächen, ebenen Flächen, Rinnen oder anderen geschlossenen Hohlräumen zu machen, muß die Vorrichtung so ausgestaltet sein, daß das Zentralchassis jeweils genau mittig zwischen oberer und unterer Kanalwand angeordnet ist. Gedacht ist beispielsweise an Kanalrohre, Luftansaugkanäle von Flugzeugen (sog. air-intakes), Rauchgasführungen und dergleichen, wobei diese Kanäle und Rinnen über ihre Länge einen wechselnden Querschnitt aufweisen können.

Bisher wurden derartige Kanäle durch Personen gereinigt, die in diese Kanäle hineinkriechen mußten, dabei vollständig in eine Schutzkleidung eingehüllt waren und auch ihre Atemluft von außen bezogen. Es handelte sich um eine äußerst gesundheitsbelastende und anstrengende Tätigkeit, die niemandem über längere Zeit zugemutet werden konnte.

Es stellt sich die Aufgabe, die manuell durch Bedienungspersonen durchzuführenden Strahlarbeiten und dergleichen durch eine Vorrichtung durchführen zu lassen, die alle Erfordernisse erfüllt, die an das gleichmäßige, schonende und effektive Bearbeiten und Reinigen derartiger Flächen zu stellen ist. Eine besonders wichtige Bedingung ist, daß der bewegliche Kopf, insbesondere Strahlkopf, in einem genau festgelegten und definierten Abstand von der Strahloberfläche, welches üblicherweise die gesamte Innenfläche des Kanales ist, angeordnet und bewegt ist, so daß es nicht z. B. zu Beschädigungen, sog. "Headcrashes" kommen kann. Insbesondere bei Flugzeug-Luftansaugkanälen handelt es sich hierbei um äußerst dünne Mantelflächen von nur 0,8 mm Dicke.

Diese Aufgabe wird mit einer Vorrichtung der eingangs genannten Art gelöst, die dadurch gekennzeichnet ist, daß wenigstens zwei am Zentralchassis pendelnd angebrachte Tragarme vorhanden sind, die jeweils in gleichem Abstand zur Mittellinie des Zentralchassis oberhalb und unterhalb desselben ein Paar Räder tragen.

Durch diese Anordnung eines Zentralchassis zwischen vier Radpaaren wird gewährleistet, daß die Mittellinie des Zentralchassis sich immer genau auf derselben Höhe zwischen Scheitel und Sohle des Kanales befindet. Eine Strahlkopf-Vorrichtung, die in Höhe des Zentralchassis angebracht ist, hat demnach nach allen Seiten denselben Abstand von der Oberfläche des zu reinigenden Kanales.

Vorzugsweise sind dabei die Tragarme mit den Rädern relativ zueinander gegenläufig verdrehbar gegenüber dem Zentralchassis aufgehangen.

Vorzugsweise wird der Fahrwagen so ausgestattet, daß das Zentralchassis wenigstens zwei Tragarme mit je vier Rädern aufweist und daß einer der Tragarme sich in unmittelbarer Nachbarschaft zur Anbringung des Strahlkopfes befindet.

Vorzugsweise wird weiterhin eine genaue Einstellung der Tragarme dadurch hervorgerufen, daß mit Hilfe eines Kraftspeichers der Tragarm in eine Lage maximaler Abspreizung in Bezug auf das Zentralchassis verdreht gehalten ist. Unter Kraftspeicher kann sowohl eine Torsionsfeder, eine Zylinderfeder oder eine andere Federanordnung oder aber auch eine hydraulische Kraftspeicheranordnung verstanden werden.

Anstelle von Rädern können auch Gleitschuhe oder Gleitklötze vorgesehen werden; dabei kann der Fahrwagen sowohl passiv als auch aktiv über Räder angetrieben werden.

Um den Arbeits- und Fahrweg des Fahrwagens von ablagerndem Strahlmittel freizuhalten, ist eine Fegevorrichtung, vorzugsweise eine Fegedüse oder ein Fegedüsenpaar am Anfang und am Ende des Fahrwagens angebracht.

Merkmale weiterer Unteransprüche werden im folgenden in der Zeichnungsbeschreibung erläutert. Die Zeichnung zeigt Ausführungsbeispiele.

Figur 1 zeigt eine Vorrichtung in perspektivischer Darstellung;

Figur 2 eine Vorrichtung in Seitenansicht;

Figur 3 eine Vorrichtung von oben gesehen;

Figur 4 den Antrieb der Vorrichtung.

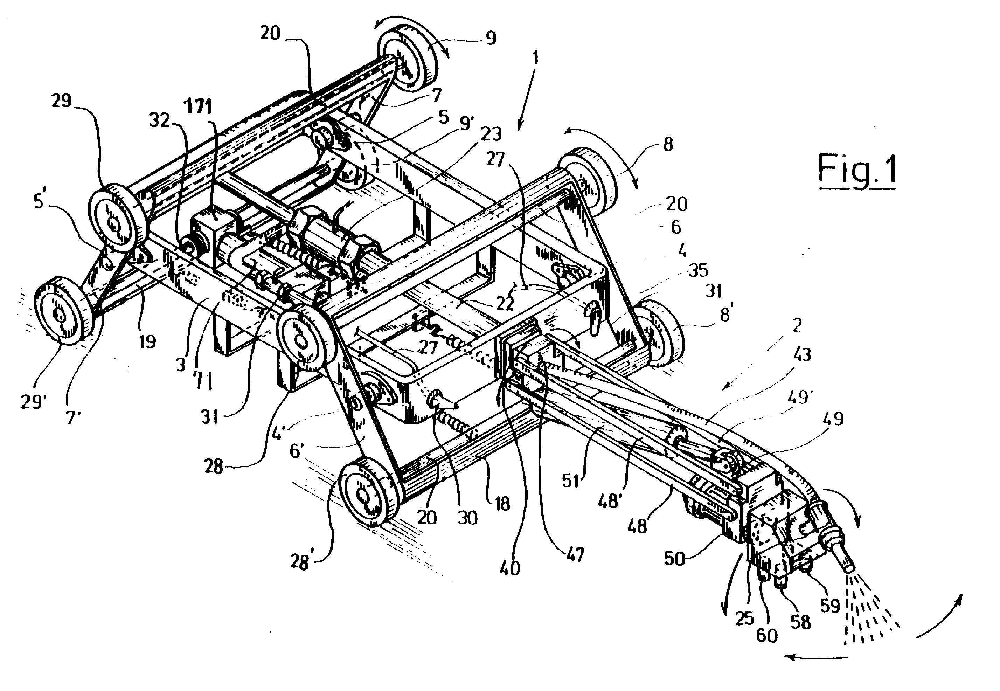

Die in den Figuren 1 bis 4 dargestellte Vorrichtung besteht im wesentlichen aus einem Fahrwagen 1 mit einem Manipulatorarm 2. Länge und weitere Abmessungen des Fahrwagens sind an die Abmessungen der zu befahrenden Kanäle angepaßt. Wird die Vorrichtung beispielsweise zum Reinigen von Flugzeug-Lufteinsaugkanälen für Triebwerke (air-intakes) mit wechselndem Durchmesser über ihre Länge verwendet, so ist der Abstand der Pendellager (siehe unten) in Fahrtrichtung gesehen etwa 75 cm. Alle anderen Abmessungen können hier gemäß dem dargestellten Ausführungsbeispiel abgeleitet werden.

Der Fahrwagen 1 besteht aus einem Zentral-Chassis 3, das in Draufsicht die Form eines geschlossenen Rahmens hat. An den in beiden Fahrtrichtungen äußeren Ende des Zentralchassis 3 sind auf beiden Seiten jeweils Pendellager 4, 4′ und 5, 5′ angebracht. Jedes der Pendellager 4, 4′ und 5, 5′ trägt genau in dessen Mitte einen Tragarm 6, 6′ und 7, 7′. Die vier Tragarme 6, 6′ und 7, 7′ wiederum tragen an ihren Enden je ein Rad 8, 8′, 9, 9′, 28, 28′ und 29, 29′, das jeweils mit einem Reifen aus gummielastischem Material versehen ist. Der Abstand der an einem Tragarm befestigten Räder, z. B. 8 zu 8′, gemessen von konträr liegenden Scheitel zu Scheitel, ist im allgemeinen größer als die größte lichte Höhe eines zu reinigenden Kanals.

Die unteren Enden der Tragarme 6 und 6′ bzw. 7 und 7′ sind durch Traversen 18 und 19 miteinander verbunden. Weiterhin laufen die zu den Rädern 8, 28 - 8′/28′ - 9, 29 - 9′ /29′ - gehören Achsen 20 parallel zu den Traversen 8 quer zum Zentralchassis 3 und sorgen für eine Versteifung der radtragenden Gebilde.

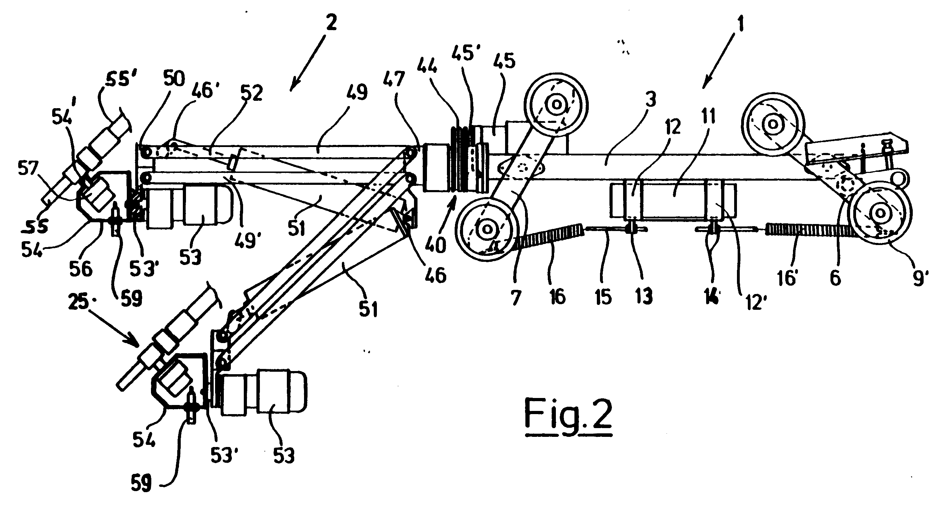

Unterhalb des Zentralchassis 3 befinden sich zwei Klemmkästen 11, 11′, die von zwei gebogenen Haltestreben 12, 12′ gehalten werden. An diesen Haltestreben 12, 12′ sind wiederum je zwei Gewindeblöcke 13, 13′ und 14, 14′, nach unten ragend befestigt. Die Öffnung der Gewindeblöcke 13, 13′ bzw. 14, 14′ ist von je einer Gewindestange 15 durchsetzt, die an ihrem freien Ende mit einer Zylinder-Zugfeder 16, 16′ verbunden ist. Das andere Ende der Zugfeder ist an einer der Traversen 18 bzw. 19 befestigt, wobei jeweils die beiden zugehörigen Tragarme bis zu einem Anschlag (nicht dargestellt) in Gegenuhrzeigerrichtung bzw. Uhrzeigerrichtung gezogen werden können, wie dies in Figur 2 dargestellt ist. Eine entsprechende Feder 16′ ist am hinteren Ende des Fahrwagens vorhanden und zieht den dort befindlichen Tragarm 6 bzw. 6′ in Uhrzeigerrichtung. Auf der gegenüberliegenden Seite des Fahrwagens 1 ziehen entsprechende Federn im Bereich der Tragarme 6′ und 7′, wie eine Draufsicht auf den Wagen zeigt. Damit sind im unbelasteten Zustand die Tragarme gegenüber dem horizontalen Zentralchassis vertikal ausgerichtet.

In engen, von Boden und Decke begrenzten Kanälen dagegen werden die Tragarme 6, 6′ und 7, 7′ gegenläufig verdreht, wenn die endständigen Räder (z. B. 8, 8′), oben und unten Kontakt mit der Kanalinnendecke haben. Dabei bleibt das Zentralchassis 3 immer genau in der Mitte zwischen den oberen und unteren Rädern, so daß der Abstand der Mittellinie des Zentralchassis von der Sohle und dem Scheitel eines durchfahrenen Kanals gleich ist.

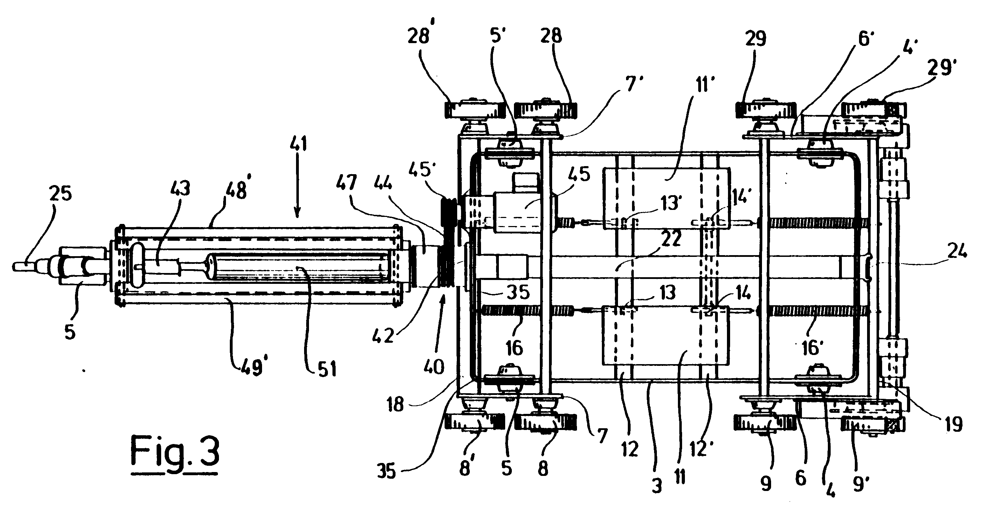

Das Zentralchassis 3 wird in Fahrtrichtung mittig durchzogen von einem Zentralrohr 22, das etwa in der Mitte von einem Abzweigventil 23 unterbrochen ist. Das Abzweigventil 23 ist zur Vereinfachung der Zeichnung in den Figuren 2 und 3 nicht dargestellt. Weiterhin ist am Ende des Fahrwagens 1 ein Anschluß für das Zentralrohr 22 an einen Zubringerschlauch (nicht dargestellt) vorgesehen. Das Zentralrohr 22 wird von außerhalb des Fahrzeuges mit einem Strom von Druckluft und körnigem Strahlmittel beschickt, der zu einem Strahlkorb 25 am Ende des Manipulatorarmes 2 geleitet wird, wie im folgenden noch erläutert werden wird.

Das Abzweigventil 23 ist mit zwei ansteuerbaren Abzweigleitungen 27 versehen, die zu zwei Reinigungsdüsen 30, 30′ führen; ähnliche Reinigungsdüsen sind auch an der Rückseite des Fahrwerkes angebracht (verdeckt). Die Reinigungsdüsen 20 dienen zum Freiblasen des Arbeitsweges von liegengebliebenen Strahlmitteln. Es ist auch möglich, nach Abschluß einer festgelegten Reinigungsphase das Strahlmittel mit Hilfe der Düsen an das Ende des zu reinigenden Kanals zu bringen und es dort in an sich bekannter Weise auszubringen. Das Abzweigventil 23 wird durch eine Zentraleinheit gesteuert; mit dieser Zentraleinheit, die außerhalb der Vorrichtung bereitgehalten sind, wird nach Bedarf strahlmittelfreie Druckluft zu der Vorrichtung geleitet und durch die Düsen 30, 31 geblasen.

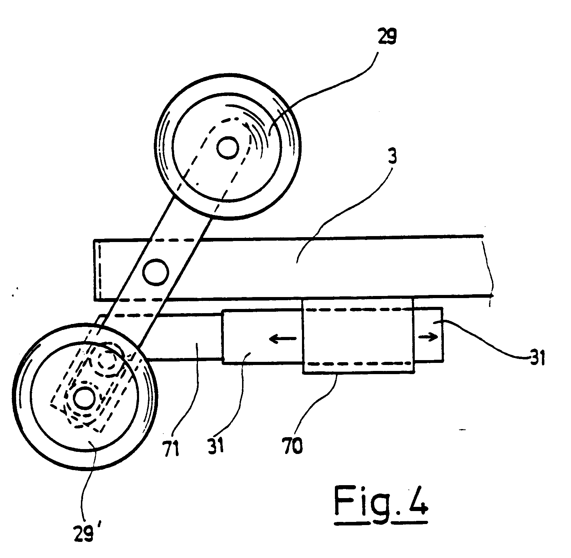

Der Antrieb des Fahrwagens 1 erfolgt über die Räder 9′ und 29′, die über einen Elektromotor 71 angetrieben

3

werden, der diese Räder vorwärts und rückwärts mit verschiedenen Geschwindigkeiten, je nach Steuerung, antreibt. Wie aus Figur 4 ersichtlich ist, ist der Elektromotor 71 in einer Traverse 70 gelagert und von unten gestützt. In dieser Traverse 70 kann er in Pfeilrichtung hin und her bewegt werden. Über ein Getriebe 171, das die Welle 32 umfaßt, erfolgt die Drehmomentübertragung. Je nach Stellung des Tragarmes 6, 6′, der die Räder trägt, verschiebt sich der Elektromotor in der Traverse 70 und folgt damit der Bewegung der Tragarme und Räder.

Ferner ist über eine luftdichte Steckerverbindung am hinteren Ende des Fahrzeuges ein Kabel anschließbar, das Energie- und Signalversorgung des Fahrzeuges mit dem Manipulatorarm besorgt. Eine Steuereinheit 33 ist am Zentralchassis 3 befestigt, von dem Kabel und weitere Verbindungen zu den betreffenden Teilen ausgehen. Im einzelnen wird die Funktion noch erläutert. Dem Fachmann sind an sich notwendige Steuerleitungen bekannt, so daß diese nicht im einzelnen beschrieben werden müssen.

An den Fahrwagen 1, und zwar an der Stirnseite 35 des Zentralchassis 3, ist ein Drehkopf 40 für den Manipulatorarm 2 angebracht. Der Drehkopf 40 ist gegenüber einer Basisplatte 42 abgedichtet verdrehbar. Durch die Basisplatte 42 und den Drehkopf 40 ist ein Schlauch 43 angeschlossen, der zum Strahlkopf 25 führt. Der Drehkopf 40 ist über eine Treibkette 44 mit der Abtriebswelle 45′ eines Elektromotors 45 verbunden, wie in Figur 3 schematisch dargestellt ist. Bei einer Variante (vgl. Figur 1) liegt der Elektromotor 45 innerhalb des Zentralchassis quer zur Fahrrichtung und treibt den Drehkopf 40 über ein (nicht dargestelltes) Getriebe an. Die Drehrichtung des Elektromotors kann gesteuert werden.

An dem Drehkopf 40 ist ein Stirnblock 47 angebracht, an dem zwei Paare von Parallelführungsstangen 48, 48′ und 49, 49′ angelenkt sind. Die Parallelführungsstangen 48, 48′ und 49, 49′ enden an einem Endblock 50. Die Auf- und Abverstellung des Endblocks 50 gegenüber dem Stirnblock 47 erfolgt über einen elektrisch betriebenen Gewindestangen-Trieb 51 mit Gewindestangen 52, der extern an den Lagerpunkten 46 und 46′ zu der Konfiguration der Parallelführungsstangen montiert ist. Durch Herein- und Herausbewegen der Gewindestange 52 wird der Endblock 50 genau in der vertikalen Ebene unter Einhaltung der Ausrichtung gegenüber dem Zentralchassis 3 geschwenkt, wie aus den beiden in Figur 2 dargestellten Schwenkstellungen ersichtlich ist. An der Unterseite des Endblocks 50 ist ein Elektromotor 53 angeflanscht, dessen Abtriebsachse 53′ mit einem Gehäuse 54 verbunden ist, das wiederum über ein Lager 54′ mit dem aus einer Düse 55 und einem Schlauchübergang 55′ bestehenden Strahlkopf 25 verbunden ist. In der unteren, horizontal liegenden Gehäusewand 56 sind zwei Näherungsfühler 58, 59 nach unten gerichtet eingebaut, die auf einer Linie quer zur Fahrtrichtung liegen. Benachbart zu den Näherungsfühlern 58, 59 sind noch zwei Gummifüße 60 als Schutz gegen Aufschlagen installiert. Die Näherungsfühler 58, 59 geben ein Signal, sobald sich das vordere Ende des Manipulatorarmes der Wand unterhalb einer bestimmten, festgelegten Minimal-Entfernung nähert. In diesem Falle kann ein Schwenken oder Entfernen des Strahlkopfes 25 bewirkt werden.

Die Vorrichtung wird mit entsprechend eingestellten Tragarmen in eine Öffnung eingeschoben, die zu Beginn eines zu reinigenden Kanales liegt. Zunächst wird der Manipulatorarm 2 auf eine Linie in Höhe des Zentralchassis fixiert. Die Vorrichtung wird bis zum Beginn der zu bestrahlenden Fläche eingefahren. Nach hinten wird die zu bestrahlende Fläche mit einem Verlängerungsrohr verlängert, so daß der Wagen so weit nach hinten herausfahren kann, daß der Strahlkorb 25 die gesamte erforderliche Fläche bestreichen kann.

An dem vorwärts und rückwärts bewegbaren Fahrwagen 1 kann der stirnseitig an dem Wagen befestigte Manipulatorarm 2 zahlreiche Bewegungen ausführen:

Achse 1:

Mit Hilfe des Elektromotors 45 kann der Stirnblock 47 mit den daran hängenden Parallelführungsstangen 48, 48′ und 49, 49′ um 360° in beiden Drehrichtungen gedreht werden.

Achse 2:

Mit Hilfe des elektrischen Linearantriebes durch den Gewindestangenantrieb 51 mit Gewindestange 52 kann der Endblock 50 auf- und abbewegt werden, wobei er seine vertikale Stellung genau beibehält. Hiermit können Abstandsdifferenzen zwischen der Strahldüse 25 und der zu reinigenden Oberfläche ausgeglichen werden.

Achse 3:

Ein Drehmodul, bestehend aus dem Elektromotor 53 und dem Gehäuse 54, paßt sich beständig automatisch an die Oberflächenkontur der zu reinigenden Fläche fein an. Die Strahldüse ist damit ständig in 45o oder in einem anderen wählbaren zur Oberfläche ausgerichtet.

4

Achse 4:

Der Strahlkopf 25 mit der Düse 55 ist von einem Schwenkantrieb 57 angetrieben, der die Düse 55 in regelmäßige Pendelbewegungen versetzt. Hierdurch wird beispielsweise eine Strahlbreite von 300 mm erreicht. Die Strahlbreite selbst ist durch das Erfordernis der Gleichmäßigkeit begrenzt und vorwählbar über den festzulegenden Schwenkwinkel.

Die Bewegungen um die Achsen 2 und 3 des vorgenannten Bewegungssystemes funktionieren automatisch; sie werden selbständig steuernd überwacht. Hierzu sind die an dem Gehäuse 54 angebrachten Näherungsfühler 58, 59 vorgesehen.

Nach dem Einschalten der Vorrichtung senkt sich der Manipulatorarm 2 durch Bewegung des Gewindestangenantriebes langsam nach unten, bis die Minimalentfernung eines Näherungsfühlers von der Oberfläche unterschritten ist. Sobald dieser Näherungsfühler (58 oder 59) ein Signal abgibt, stoppt der Gewindestangenantrieb und der Drehmodul, d. h. der Elektromotor 53, beginnt eine Drehung des Gehäuses mit den Näherungsfühlern. Die Drehung erfolgt jeweils so, daß der benachbarte Näherungsfühler zur Oberfläche hin bewegt wird. Jedem Näherungsfühler ist demnach eine bestimmte Drehrichtung des Elektromotors 53 zugeordnet. Spricht der zweite Näherungsfühler an, so erfolgt ein Zurückfahren des Manipulatorarms, bis einer der Näherungsschalter abschaltet. Anschließend erfolgt wieder eine Drehbewegung in diejenige Richtung, in der der andere Näherungsschalter wieder anspricht. Sollten beide Näherungsschalter ansprechen, so fährt der Manipulatorarm 2 nach oben und vergrößert den Abstand der Düse 25 von der Oberfläche wieder. Durch diese Regelung über zwei Näherungsschalter 58 und 59 ist es möglich, daß der Manipulatorarm 2 der Oberfläche exakt folgt und ein sehr genaues Abstrahlen ermöglicht.

Durch das ständige Pendeln der Düse im Lager 54 und das langsame Rückwärtsschreiten des Fahrwagens 1 wird ein Streifen von etwa 300 mm Breite genau gereinigt. Nach Abfahren und Reinigen dieser ersten Streifen-Strecke wird der Wagen am Ende des Kanales angelangt sein. Durch Verstellen des Drehstückes mit Hilfe des Elektromotores 45 wird der Manipulatorarm gedreht. Wieder fährt der Wagen bis an den Anfang der zu reinigenden Kanalstrecke und tastet dort selbsttätig die Kanalwölbung ab. Dabei kann die Schwenkbreite je nach den Erfordernissen, beispielsweise Lackdicke oder Empfindlichkeit, von vornherein um verschiedene Schwenkwinkel verstellt werden. Bei der nächsten Durchfahrt wird der Schwenkwinkel soweit verstellt, daß ein anderer Streifen gestrahlt wird. Als Strahlmittel werden bekannte Granulate oder dergleichen verwendet.

Es zeigt sich, daß mit dem Gerät sowohl eine gleichmäßige als auch beschädigungsfreie Reinigung schwierigst zu beherrschender Wölbungen möglich ist. Es seinoch darauf hingewiesen, daß außen überstehende Teile, die gegebenenfalls mit einer Wandung in Berührung kommen können, mit Schaum-Polstermaterial überzogen sind.

Anstelle eines Strahlkopfes kann auch eine optische Ausrüstung, ein Gamma-Strahlenelement, ein Farbsprühkopf, eine Luftreinigungsdüse oder dergleichen eingesetzt werden, wobei es darauf ankommt, daß diese Elemente stets in einem konstanten Abstand von einer Oberfläche geführt sind.

**Patentansprüche**

1. Vorrichtung mit einem beweglichen Kopf, zum Befahren von geschlossenen Kanälen, bei der der Kopf (25) über einen verdrehbaren und/oder höhenverstellbaren Ausleger (Manipulatorarm 2) mit der Stirnseite eines Zentralchassis (3) verbunden ist, das Teil eines Fahrwagens (1) ist, der über oberhalb und unterhalb des Zentralchassis (3) angeordnete Räder (8, 8′; 9, 9′; 28, 28′, 29, 29′) verfügt, gekennzeichnet durch wenigstens zwei an pendelnd am Zentralchassis angebrachte Tragarme (6, 7; 6′, 7′), die jeweils in gleichem Abstand zur Mittellinie des Zentralchassis oberhalb und unterhalb desselben ein Paar Räder (8, 28; 8′, 28′; 9, 29; 9′, 29′) tragen.

2. Vorrichtung nach Anspruch 1, dadurch gekennzeichnet, daß die Tragarme (6, 7; 6′, 7′) relativ zueinander gegenläufig verdrehbar gegenüber dem Zentralchassis (3) an diesem aufgehangen sind.

3. Vorrichtung nach Anspruch 1 oder 2, dadurch gekennzeichnet, daß einer der Tragarme (7; 7′) sich in unmittelbarer Nachbarschaft (bei 40) zur Anbringungsstelle des Kopfes (25) befindet.

4. Vorrichtung nach Anspruch 2 oder 3, dadurch gekennzeichnet, daß der oder die Tragarme (6, 7; 6′, 7′) mit Hilfe eines Kraftspeichers (16, 16′), vorzugsweise einer Zylinderfeder, in einer Lage maximaler Abspreizung in Bezug auf das Zentralchassis (3) verdreht gehalten sind.

5. Vorrichtung nach Anspruch 1, dadurch gekennzeichnet, daß wenigstens eines der unteren Räder (8, 9, 9′, 28, 29′) angetrieben ist.

6. Vorrichtung nach Anspruch 1, dadurch gekennzeichnet, daß der bewegliche Kopf mit einer Strahldüse (55) versehen ist.

7. Vorrichtung nach Anspruch 1 oder 6, dadurch gekennzeichnet, daß der Fahrwagen mit einer Fegevorrichtung versehen ist.

8. Vorrichtung nach Anspruch 7, dadurch gekennzeichnet, daß die Fegevorrichtung wenigstens eine Düse (30, 31) umfaßt, die auf die Fahrbahn gerichtet ist.

9. Vorrichtung nach Anspruch 1 oder 6, dadurch gekennzeichnet, daß der Manipulatorarm (2) mit einem Endstück versehen ist, das den Kopf motorisch verschwenkbar trägt, und daß im Bereich des Kopfes wenigstens zwei auf die Oberfläche gerichtete Näherungsfühler (58, 59) benachbart angeordnet sind, die mit einem Regelkreis verbunden sind, der den Antrieb des Schwenkmotores für den Kopf steuert.

10. Vorrichtung nach Anspruch 9, dadurch gekennzeichnet, daß der Manipulatorarm mit einem Drehgelenk, einer Parallelführung und am Ende der Parallelführung mit dem die Strahldüse tragenden Strahlkopf (25) ausgestattet ist.

11. Vorrichtung nach Anspruch 10, dadurch gekennzeichnet, daß die Parallelführung aus einen am Drehgelenk befindlichen Stirnblock (47), wenigstens zwei Parallel-Führungsstangen (48, 48' ; 49, 49') und einem Endblock (50) besteht.

12. Vorrichtung nach Anspruch 6, dadurch gekennzeichnet, daß die Strahldüse (55) an einem Pendelantrieb (53, 53') befestigt ist.

## Claims

1. An apparatus having a moving head and adapted to travel through closed conduits or ducts or the like, the head (25) being connected by way of a rotatable and/or vertically adjustable swing arm (manipulator arm 2) to the end face of a central chassis (3) which is part of a trolley or the like (4) having wheels (8, 8'; 9, 9'; 28, 28', 29, 29') disposed above and below the chassis (3), characterised by at least two carrying arms (6, 7; 6', 7') which are rockingly mounted on the central chassis (3) and which each carry equidistant from the centre-line thereof and above and below it a pair of wheels (8, 28; 8', 28'; 9, 29; 9', 29').

2. An apparatus according to claim 1, characterised in that the carrier arms (6, 7; 6', 7') are so suspended on the central chassis (3) as to be rotatable relatively to one another to opposite hands and relatively to the central chassis (3).

3. An apparatus according to claim 1 or 2, characterised in that one of the carrier arms (7; 7') is disposed immediately adjacent (at 40) the place where the head (25) is attached.

4. An apparatus according to claim 2 or 3, characterised in that by means of force-storage means (16, 16'), preferably a cylinder spring, the or each carrier arm (6, 7; 6' 7') is maintained turned in a position of maximum staying relatively to the central chassis (3).

5. An apparatus according to claim 1, characterised in that at least one of the bottom wheels (8, 9, 9', 28, 29') is driven.

6. An apparatus according to claim 1, characterised in that the moving head has a blasting nozzle (55).

7. An apparatus according to claim 1 or 6, characterised in that the trolley has sweeping means.

8. An apparatus according to claim 7, characterised in that the sweeping means comprise at least one nozzle (30, 31) directed towards the path along which the trolley moves.

9. An apparatus according to claim 1 or 6, characterised in that the manipulator arm (2) has an end member so carrying the head that the same is pivotable by motor means, and at least two proximity sensors (58, 59) which are directed towards the surface are disposed adjacent one another near the head and are connected to a control circuit controlling the drive of the head-pivoting motor.

10. An apparatus according to claim 9, characterised in that the manipulator arm has a pivot joint, a parallel guide and at the end thereof the blast head (25) which carries the blast nozzle.

11. An apparatus according to claim 10, characterised in that the parallel guide takes the form of a frontal block (47) disposed on the pivot, at least two parallel guide bars (48, 48' ; 49, 49') and an end block (50).

12. An apparatus according to claim 6, characterised in that the blast nozzle (55) is secured to a rocking drive (53, 53').

## Revendications

1. Dispositif à tête mobile, destiné à parcourir des canaux fermés, dans lequel la tête (25) est reliée, par l'intermédiaire d'un bras (bras manipulateur (2)) rotatif et/ou réglable en hauteur, au côté frontal d'un châssis central (3), qui est un élément d'un wagonnet (1) qui comporte des roues (8, 8' ; 9, 9' ; 28, 28' ; 29, 29') disposées au-dessus et au-dessous du châssis central (3), caractérisé par au moins deux bras de support (6, 7;

6′, 7′) montés de façon oscillante sur le châssis central, qui portent une paire de roues (8, 28; 8′, 28′; 9, 29; 9′, 29′) situées à même distance de l'axe du châssis central, au-dessus et au-dessous de celui-ci.

2. Dispositif selon la revendication 1, caractérisé en ce que les bras de support (6, 7; 6′, 7′) sont suspendus au châssis central (3) pouvant tourner par rapport à ce dernier dans des sens opposés l'un à l'autre.

3. Dispositif selon la revendication 1 ou 2, caractérisé en ce que l'un des bras de support (7; 7′) se trouve au voisinage immédiat (en 40) de l'emplacement de montage de la tête (25).

4. Dispositif selon la revendication 2 ou 3, caractérisé en ce que le ou les bras porteurs (6, 7; 6′, 7′) sont maintenus tournés par rapport au châssis central (3), dans une position d'écartement maximal, à l'aide d'un accumulateur d'énergie (16, 16′), de préférence un ressort cylindrique.

5. Dispositif selon la revendication 1, caractérisé en ce qu'au moins l'une des roues inférieures (8, 9, 9′, 28, 29′) est entraînée.

6. Dispositif selon la revendication 1, caractérisé en ce que la tête mobile est pourvue d'un éjecteur (55).

7. Dispositif selon la revendication 1 ou 6, caractérisé en ce que le wagonnet est pourvu d'un dispositif de ramonage.

8. Dispositif selon la revendication 7, caractérisé en ce que le dispositif de ramonage comprend au moins une ajutage (30, 31) qui est orienté vers la voie de roulage.

9. Dispositif selon la revendication 1 ou 6, caractérisé en ce que le bras manipulateur (2) est pourvu d'un élément d'extrémité portant la tête qui pivote de façon motorisée, et en ce qu'au moins deux capteurs de proximité (58, 59) orientés vers la surface, qui sont reliés à un circuit qui règle l'entrainement du moteur de pivotement de la tête , sont disposés au voisinage de la tête.

10. Dispositif selon la revendication 9, caractérisé en ce que le bras manipulateur est équipé d'une articulation à charnière, d'un guidage parallèle, et d'une tête d'éjecteur (25) portant l'éjecteur située à l'extrémité du guidage parallèle.

11. Dispositif selon la revendication 10, caractérisé en ce que le guidage parallèle se compose d'un bloc frontal (47) se trouvant sur l'articulation à charnière, d'au moins deux tiges de guidage parallèle (48, 48′; 49, 49′) et d'un bloc d'extrémité (50).

12. Dispositif selon la revendication 6, caractérisé en ce que l'éjecteur (55) est fixé sur un entrainement oscillant (53,53′).

Fig.1

EP 0 365 921 B1

Fig.2

EP 0 365 921 B1

Fig.3

EP 0 365 921 B1

Fig.4